# EUROPEAN PATENT APPLICATION

(11) **EP 2 692 714 A1**
(43) Date of publication of application: **05.02.2014**
(21) Application number: 12763870.8
(22) Date of filing: 09.03.2012
(51) Int. Cl.: C04B 41/88, B01D 53/86, B01D 53/94, B01J 35/02, B01J 35/04, C04B 35/565, C04B 38/00, C04B 41/85

(54) **METHOD FOR PRODUCING HONEYCOMB STRUCTURED BODY, METHOD FOR PRODUCING SI-SIC-BASED COMPOSITE MATERIAL, AND HONEYCOMB STRUCTURED BODY**

(30) Priority: 28.03.2011 JP 2011069939
(71) Applicant: NGK Insulators, Ltd., Nagoya-shi, Aichi 467-8530 (JP)
(72) Inventor: FURUKAWA, Masahiro, Nagoya-city Aichi 467-8530 (JP); SHINSHI, Mariko, Nagoya-city Aichi 467-8530 (JP); MATSUDA, Kazuyuki, Nagoya-city Aichi 467-8530 (JP)
(74) Representative: Naylor, Matthew John
(86) International application number: PCT/JP2012/056119
(87) International publication number: WO 2012/132837

(57) **Abstract**

A honeycomb structure 20 according to the present invention is produced by a method for manufacturing a honeycomb structure, the method including the steps of burying a burial base material into pores of a porous honeycomb base material which is provided with a partition portion 22 constituting a plurality of cells 23 and which has a SiC phase and an oxide phase containing a Si oxide, where the burial base material contains metal Si particles having a particle diameter smaller than the pore diameter of the pore and metal Al particles having a particle diameter smaller than the pore diameter of the pore, and melting the metal Si particles and the metal Al particles, which are contained in the burial base material, by heating the porous honeycomb base material including the buried burial base material in an inert atmosphere, so as to form a metal phase containing metal Si and metal Al in pores of the porous honeycomb base material.

## Description

### Technical Field

The present invention relates to a method for manufacturing a honeycomb structure, a method for manufacturing a Si-SiC based composite material, and a honeycomb structure.

### Background Art

Hitherto, as for honeycomb structures, the structures carrying catalysts to remove hazardous substances, e.g., nitrogen oxides, carbon monoxide, and hydrocarbons, contained in exhaust gases have been known. Regarding such structures, in the case where the temperature of an exhaust gas is low, hazardous substances may not be removed sufficiently. Then, a structure has been proposed, wherein the performance of exhaust gas cleaning is enhanced by heating a honeycomb structure, so as to raise the temperature of the exhaust gas passing through the honeycomb structure. For example, Patent literature 1 proposes a honeycomb body for energization heat generation, wherein heat generation is controlled by controlling a current flow in energization of a partition. The honeycomb body for energization heat generation is provided with electrode portions having a low volume resistivity and a heat generation portion having a high volume resistivity, the electrode portions are disposed all over both end surfaces, the volume resistivity of the heat generation portion is 0.1 to 10 Ωcm, the volume resistivity of the electrode portion is less than or equal to one-tenth the volume resistivity of the heat generation portion, and at least the heat generation portion is formed from a composite material of metal and ceramic.

### Citation List

### Patent Literature

Patent Literature 1: Japanese Unexamined Patent Application Publication No. 2010-229976

### Disclosure of Invention

### Problems to be resolved by the invention

Meanwhile, regarding the honeycomb body in Patent literature 1, for example, metal Si is brought into contact with a Si-SiC based honeycomb body surface, and metal Si is melt-impregnated by heating under vacuum. The central portion not impregnated with metal Si is specified to be a heat generation portion and both end portions impregnated with metal Si is specified to be electrode portions. Regarding such a honeycomb body, in impregnation of metal Si, impregnation is sometimes insufficient under normal pressure which is a generally employed mass production condition. Furthermore, the difference in electrical resistance between the electrode portion and the heat generation portion may be insufficient by only impregnation of Si. Consequently, it has been desired that the electrode portions are formed more easily and the volume resistivity of the electrode portion is further decreased.

The present invention has been made in consideration of such problems, and it is a main object to provide a method for manufacturing a honeycomb structure and a method for manufacturing a Si-SiC based composite material, wherein electrode portions are formed more easily and the volume resistivity can be further decreased with respect to a Si-SiC based honeycomb structure.

### Solution to Problem

In order to achieve the above-described object, the present inventors performed intensive research and found that a metal phase containing metal Si was able to be formed in pores of a Si-SiC based porous honeycomb base material by burying a burial base material containing metal Si and metal Al into pores and inducing melting and the volume resistivity was able to be decreased. Consequently, the present invention has been completed.

A method for manufacturing a honeycomb structure of the present invention includes the steps of: burying a burial base material into pores of a porous honeycomb base material which is provided with a partition portion constituting a plurality of cells serving as flow paths of a fluid and which has a SiC phase and an oxide phase containing a Si oxide, where the burial base material contains metal Si particles having a particle diameter smaller than the pore diameter of the pore and metal Al particles having a particle diameter smaller than the pore diameter of the pore; and melting the metal Si particles and the metal Al particles, which are contained in the burial base material, by heating the porous honeycomb base material including the buried burial base material in an inert atmosphere, so as to form a metal phase containing metal Si and metal Al in pores of the porous honeycomb base material.

A method for manufacturing a Si-SiC based composite material of the present invention includes the steps of: burying a burial base material into pores of a porous base material which has a SiC phase and an oxide phase containing a Si oxide, where the burial base material contains metal Si particles having a particle diameter smaller than the pore diameter of the pore and metal Al particles having a particle diameter smaller than the pore diameter of the pore; and melting the metal Si particles and the metal Al particles, which are contained in the burial base material, by heating the porous base material including the buried burial base material in an inert atmosphere, so as to form a metal phase containing metal Si and metal Al in pores of the porous base material.

According to the present invention, electrode portions are formed more easily, and the volume resistivity can be further decreased with respect to a Si-SiC based honeycomb structure. The reason for this is estimated as described below. For example, it is estimated that pores of the porous honeycomb base material having an oxide phase containing a Si oxide may not be impregnated with molten metal Si easily, although in the case of the burial base material containing metal Si particles and metal Al particles, the metal Si particles can be introduced into pores of the porous honeycomb base material more easily. Also, it is estimated that metal Al particles are introduced into pores together with metal Si particles and, thereby,
the volume resistivity of the electrode portion can be further decreased as compared with the case where only metal Si particles are buried.

### Brief Description of Drawings

Fig. 1 is an explanatory diagram schematically showing an example of the configuration of a honeycomb structure 20.
Fig. 2 is an explanatory diagram showing an example of a burial step and a melting step.
Fig. 3 is an explanatory diagram schematically showing an example of the configuration of a honeycomb structure 20B.
Fig. 4 is an explanatory diagram schematically showing an example of the configuration of a honeycomb structure 20C.
Fig. 5 shows SEM photographs of sections of a porous honeycomb base material and a honeycomb structure.
Fig. 6 shows SEM photographs of a porous honeycomb base material after a melting treatment in Example 12. Description of Embodiments

Next, the embodiments to execute the present invention will be explained with reference to the drawings. A honeycomb structure according to the present invention is disposed in, for example, an exhaust pipe of an engine and serves as a catalyst carrier to carry a catalyst for cleaning an exhaust gas of an engine of an automobile.

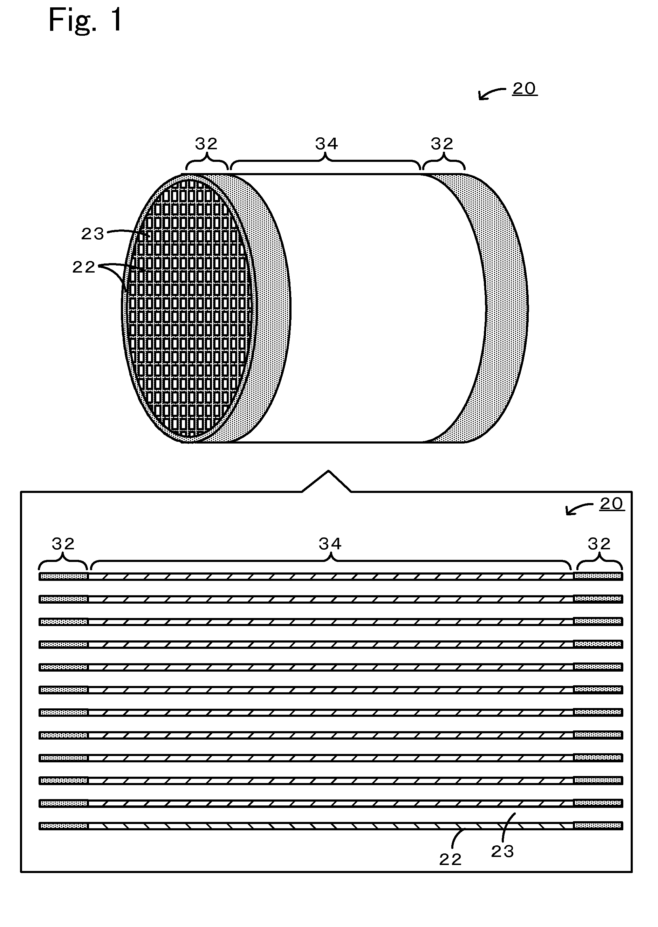

Fig. 1 is an explanatory diagram schematically showing an example of the configuration of a honeycomb structure 20 according to the present invention. As shown in Fig. 1, this honeycomb structure 20 is provided with a partition portion 22 constituting a plurality of cells 23 serving as flow paths of a fluid. This honeycomb structure 20 has a structure, in which both ends of the cell 23 are opened, and is provided with electrode portions 32 disposed as parts of the partition portion 22 and a heat generation portion 34 which is a part of the partition portion 22 and which has a volume resistivity higher than that of the electrode portion 32. In this honeycomb structure 20, the partition portion 22 is formed and, thereafter, end portion regions thereof are subjected to a predetermined burying treatment by using a burial base material containing metal Si and metal Al, so as to convert parts of the partition portion 22 to electrode portions 32. In this partition portion 22, the region not provided with the electrode portions 32 is the heat generation portion 34, and the electrode portions 32 and the heat generation portion 34 adjoin each other. When a voltage is applied between the electrode portions 32 of this honeycomb structure 20, the heat generation portion 34 generates heat through energization.

The outside shape of this honeycomb structure 20 is not specifically limited and, shapes, e.g., the shape of a circular cylinder, the shape of a quadrangular prism, the shape of an elliptic cylinder, and the shape of a hexagonal prism, can be employed. Meanwhile, as for the shape of a cross-section of the cell 23, the shapes of a quadrangle, a triangle, a hexagon, an octagon, a circle, an ellipse, and the like can be employed. Here, the case where the outside shape of the honeycomb filter 20 is formed into the shape of a circular cylinder and the cross-sectional shape of the cell 23 is formed into a quadrangle will be described mainly.

The electrode portions 32 are formed as parts of the partition portion 22 and the remainder of the partition portion 22 is configured to serve as the heat generation portion 34. The porosity of the partition portion 22 is preferably 20 percent by volume or more and 85 percent by volume or less, and more preferably 25 percent by volume or more and 50 percent by volume or less. Furthermore, the average pore diameter of the partition portion 22 is preferably within the range of 2 µm or more and 30 µm or less. Consequently, in formation of the electrode portions 32, the burial base material is buried into pores easily, and hazardous components contained in an exhaust gas can be removed sufficiently. This partition portion 22 is formed having a thickness, that is, a partition thickness, of preferably 20 µm or more and 300 µm or less, more preferably 30 µm or more and 200 µm or less, and further preferably 50 µm or more and 150 µm or less. In the case where the partition portion 22 is formed having such porosity, average pore diameter, and thickness, the exhaust gas comes into contact with the partition portion 22 easily, and hazardous components are removed easily. In this regard, the porosity and the average pore diameter of this partition portion 22 refer to the results measured by mercury porosimetry.

The heat generation portion 34 is formed as the partition portion 22 in itself and is provided with a SiC phase serving as an aggregate and an oxide phase containing a Si oxide. The SiC phase serving as an aggregate of this heat generation portion 34 is the same as that in the electrode portions 32, the thermal expansion coefficient and the strength are close to those of the electrode portions 32 and, therefore, an occurrence of cracking between the electrode portions 32 and the heat generation portion 34 and the like can be suppressed. Moreover, the oxide phase is provided and, therefore, the corrosion resistance and the strength can be further enhanced. This heat generation portion 34 may be a plurality of regions, but is preferably one continuous region from the viewpoint of uniform heating of the whole honeycomb structure 20. In the heat generation portion 34, the ratio of the SiC phase to the oxide phase and the porosity are not specifically limited. Meanwhile, the heat generation portion 34 may contain metal Si, but it is preferable that the proportion of metal Si is lower than that in the electrode portions 32. Consequently, the volume resistivity is made larger than the volume resistivity of the electrode portions 32. In this regard, the volume resistivity is preferably 10 to 200 Ωcm from the viewpoint of practically efficient heat generation.

The electrode portions 32 are connected to a power supply and energize the heat generation portion 34. The connection method to the power supply is not specifically limited. A feeder or a feeding terminal connected to the power supply may be brazed or be mechanically connected by using a rivet or the like. It is enough that the electrode portion 32 is disposed as a part of the partition portion 22. The electrode portion 32 may be disposed at one place, or the electrode portions 32 may be disposed at two or more places. In the case where the electrode portion 32 is disposed at one place, an external electrode is attached to the partition portion 22 excluding the electrode portion 32, and the partition portion 22 can be energized by the electrode portion 32 and the external electrode. The case where the electrode portions 32 are disposed at two or more places is preferable because the partition portion 22 can be energized by paired electrode portions 32. Alternatively, even in the case where the electrode portions 32 are disposed at two or more places, an external electrode may be attached to the partition portion 22 excluding the electrode portions 32, and the partition portion 22 may be energized by the electrode portions 32 and the external electrode. It is preferable that the electrode portions 32 are disposed at one end portion of the honeycomb structure 20 and the other end portion opposite thereto. In this regard, hereafter, such an aspect may also be referred to as "an aspect of deposition at opposite end portions". The feeder or the feeding terminal is attached easily and the electric power is fed from the power supply easily because of disposition at the end portion. Furthermore, in the case where the electrode portions 32 are disposed oppositely, the distribution of the amount of heat generation from the heat generation portion 34 can be made almost uniform. In particular, the electrode portions are disposed preferably in such a way that the opposite surfaces of the electrode portions 32 become parallel to each other because the length of the heat generation portion 34, that is, the resistance, can be made constant and, thereby, the distribution of the amount of heat generation from the partition portion in the region between the electrode portions can be made more uniform.

In the present aspect, the electrode portions 32 are disposed at end portions oppositely and, as shown in Fig. 1, the electrode portions 32 are disposed at an upstream side end portion of the honeycomb structure 20 and a downstream side end portion. Such a case is preferable because a current passes along the partition portion 22 and, thereby, the amount of heat generation from the partition portion 22 can be made almost constant from the upstream side to the downstream side. It is preferable that this electrode portion 32 has a length of electrode portion 32 relative to the whole length of the honeycomb structure 20 in the direction of energization, that is, the length of the electrode portion 32 relative to the whole length of the honeycomb structure 20 in the flow path direction, of one-hundredth or more and one-fifth or less. If the length is one-hundredth or more, a sufficient conductive path can be ensured and, therefore, even when a large current is passed during energization heat generation, a potential difference in the electrode is not generated easily, so that the suitability for the electrode is enhanced. Furthermore, if the length is one-fifth or less, the heat generation portion 34 does not become too small. Meanwhile, in the use as a honeycomb structure to be mounted on a vehicle, a practical length of the electrode portion 32 in the flow path direction is preferably 1 mm or more and 50 mm or less, and more preferably 5 mm or more and 30 mm or less. In particular, it is preferable that the length in the flow path direction of the electrode portion 32 at the upstream side end portion is 5 mm or more. This is because, on the upstream side, erosion of the partition portion 22 due to an exhaust gas stream and the like occur easily and it is required that the thickness is sufficient for leaving the electrode even in this case. At this time, the electrode portions 32 may be disposed at a part of the upstream side end portion and a part of the downstream side end portion. According to this, for example, in the case where it is desired that only the inside circumference region is heated or in the case where it is desired that only the outside circumference region is heated, favorably, heating can be performed in a predetermined range. Meanwhile, the electrode portions 32 may be disposed at the whole upstream side end portion and the whole downstream side end portion. According to this, when rapid heating is required, for example, at starting of an engine, the whole honeycomb structure 20 can be heated efficiently and uniformly. In addition, a temperature difference is not generated easily, so that an occurrence of cracking can be further suppressed. Moreover, even when cracking or the like occurs between the electrode portions 32 and the heat generation portion 34 in part, energization is ensured favorably.

The electrode portion 32 has a SiC phase serving as an aggregate, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less. Regarding such an electrode portion 32, the volume resistivity can be decreased as compared with that in the case where Al is not contained in the metal phase. In the electrode portion 32, the proportions of the SiC phase, the oxide phase, and the metal phase, the porosity, and the like are not specifically limited. For example, the electrode portion 32 may be provided with 15 percent by volume or more and 50 percent by volume or less of SiC phase, 2 percent by volume or more and 30 percent by volume or less of oxide phase, 25 percent by volume or more and 80 percent by volume or less of metal phase, and 1 percent by volume or more and 30 percent by volume or less of pores. In this regard, from the viewpoint that the volume resistivity of the electrode portion 32 is specified to be sufficiently lower than that of the heat generation portion 34, it is preferable that the proportion of the metal phase is high and the proportion of the pores is low. Here, regarding the volume ratio, initially, the porosity (percent by volume) is determined by an Archimedes method or mercury porosimetry, and the volume percentages of the SiC phase, the oxide phase, and the metal phase can be determined through conversion based on the composition ratio on the assumption that the remainder portion is composed of the SiC phase, the oxide phase, and the metal phase. Alternatively, as for a method different from that described above, for example, a polished surface is photographed by using a scanning electron microscope (SEM) or the like, and the resulting photograph is subjected to computer image analysis, so as to determine the volume ratio. More concretely, the SiC phase, the oxide phase, the metal phase, and the pore portion can be distinguished on the basis of the difference in contrast between the reflection electron images, so that the individual area ratios can be taken as the volume ratios. In the electrode portion 32, the proportions of the SiC phase, the oxide phase, the metal phase, and the pores may be uniform throughout the region or may not be uniform. For example, the electrode portion 32 may be formed in such a way that the metal phase tends to decrease toward the adjacent heat generation portion 34. According to this, as the region comes close to the heat generation portion 34, the volume resistivity increases and the amount of heat generation during energization increases, so that the temperature gradient between the electrode portion 32 having a small amount of heat generation and the heat generation portion 34 having a large amount of heat generation can be made gradual. Consequently, an occurrence of cracking and the like in a boundary region between the electrode portion 32 and the heat generation portion 34 can be suppressed. Furthermore, for example, the electrode portion 32 may be formed in such a way that the porosity tends to come close to the porosity of the heat generation portion 34 toward the adjacent heat generation portion 34. Accordingly, the strength gradient between the electrode portion 32 and the heat generation portion 34 becomes gradual, and an occurrence of cracking and the like in the boundary region between the electrode portion 32 and the heat generation portion 34 can be suppressed. At this time, preferably, the electrode portion 32 is formed in such a way that the porosity tends to increase toward the adjacent heat generation portion 34. This is because in the case where the electrode portion 32 is disposed at the end portion of the honeycomb structure 20, the strength of the surface of the honeycomb structure 20 tends to increase and the durability to erosion can be enhanced.

In the electrode portion 32, the oxide phase may include an Al oxide and an alkaline-earth metal oxide in addition to a Si oxide. In this regard, here, the alkaline-earth metal is represented by M. The Si oxide contains Si as an oxide and may be a composite oxide, e.g., a Si-Al composite oxide, a Si-M composite oxide, or a Si-Al-M composite oxide, besides SiO₂. Likewise, the Al oxide may be a composite oxide, e.g., an Al-Si composite oxide, an Al-M composite oxide, or an Al-Si-M composite oxide, besides Al₂O₃. Likewise, the alkaline-earth metal oxide may be a composite oxide, e.g., an M-Si composite oxide, a M-Al composite oxide, or an M-Si-Al composite oxide, besides an oxide represented by MₓO_{y} (x and y are integers of 1 or more). As described above, the Si oxide, the Al oxide, and the alkaline-earth metal oxide may not be distinguished clearly. In the oxide phase, it is preferable that the alkaline-earth metal contained in the alkaline-earth metal oxide is at least one type of Mg, Ca, Sr, and Ba. According to this, the oxidation resistance and the thermal shock resistance can be improved and the strength can be enhanced.

In the electrode portion 32, the metal phase includes metal Si and metal Al. Metal Si and metal Al may be present adjacently, or be present discretely. Alternatively, one of the two metals may be dissolved into the other to make a solid solution. For example, metal Al may be dissolved into metal Si to make a solid solution. Regarding this metal phase, the proportion of metal Al relative to the total amount of metal Si and metal Al is 0.001 percent by mole or more and 20 percent by mole or less. This is because if the proportion of metal Al is 0.001 percent by mole or more, the volume resistivity of the electrode portion 32 can be decreased. In addition, this is because if the proportion of metal Al is 20 percent by mole or less, degradation in the heat resistance can be further suppressed. The proportion of metal Al in this metal phase is more preferably 0.1 percent by mole or more, and further preferably 0.4 percent by mole or more because the volume resistivity of the electrode portion 32 can be further decreased. Meanwhile, the proportion of metal Al in the metal phase is more preferably 10 percent by mole or less, and further preferably 5 percent by mole or less because degradation in the heat resistance can be further suppressed.

It is preferable that the volume resistivity of the electrode portion 32 is less than or equal to one-half the volume resistivity of the heat generation portion 34. According to this, in energization heat generation of the honeycomb structure, a current can be passed without potential difference throughout the end surface (electrode portion 32) of the honeycomb structure and the whole heat generation portion can be heated uniformly. In this regard, from the viewpoint that heating can be performed more uniformly, it is favorable that the electrode portion 32 has a lower volume resistivity. The volume resistivity is preferably one-fifth or less, more preferably one-tenth or less, and further preferably one-hundredth or less. Meanwhile, from the viewpoint that the SiC phase, the oxide phase, the metal Si phase, and the pore portions are included practically, the volume resistivity of the electrode portion 32 is preferably 10⁻⁶ Ωcm or more and 10 Ωcm or less. In this range, from the viewpoint that a potential difference is not easily generated practically, 5 Ωcm or less is preferable, and 1 Ωcm or less is more preferable.

The thus produced partition portion 22 of the honeycomb structure is allowed to carry a catalyst appropriately in accordance with the use thereof. This is because hazardous materials, e.g., HC, CO, NOx, and particulate matters (PM), contained in an exhaust gas can be removed by the catalyst. At this time, the catalyst may be carried by the partition portion of the electrode portion 32, but is preferably carried by at least the partition portion of the heat generation portion 34. This is because the temperature of the exhaust gas can be raised to a temperature suitable for cleaning with the catalyst by heat generation from the heat generation portion 34 due to energization. The catalyst can be activated at an early stage of the starting of an engine by employing such a configuration. Furthermore, regarding even automobiles having low exhaust gas temperatures, such as, hybrid cars and plug-in hybrid cars, catalysts can be activated to clean efficiently. Examples of catalysts include NOx occlusion catalysts formed from alkali metals (Li, Na, K, Cs, and the like) and alkaline-earth metals (Ca, Ba, Sr, and the like), ternary catalysts, co-catalysts typified by an oxide containing at least one of Ce and Zr, and HC (Hydro Carbon) adsorbing agents. Meanwhile, as for catalysts in the case where, for example, this honeycomb structure 20 is applied to DPE, an oxidation catalyst capable of oxidizing and burning PM can be used favorably. Examples of oxidation catalysts include noble metals, e.g., platinum (Pt), palladium (Pd) and rhodium (Rh).

Next, a method for manufacturing the honeycomb structure 20 provided with the partition portion 22 constituting a plurality of cells serving as flow paths of a fluid will be described. This method for manufacturing the honeycomb structure may include, for example, a base material production step to produce a porous honeycomb base material having a SiC phase and an oxide phase containing a Si oxide, a burial step to bury a burial base material into pores of the resulting porous honeycomb base material, where the burial base material contains metal Si particles and metal Al particles having a particle diameter smaller than the pore diameter of the pore, and a melting step to melt the metal Si particles and the metal Al particles by heating the porous honeycomb base material including the buried burial base material in an inert atmosphere, so as to form a metal phase containing metal Si and metal Al in pores of the porous honeycomb base material.

The porous honeycomb base material produced in the base material production step is provided with the SiC phase serving as an aggregate and the oxide phase containing a Si oxide. Furthermore, a metal Si phase containing metal Si may be provided. In the porous honeycomb base material, the proportions of the SiC phase, the oxide phase, and the metal phase, the porosity, and the like are not specifically limited. For example, the porous honeycomb base material may be provided with 15 percent by volume or more and 50 percent by volume or less of SiC phase, 2 percent by volume or more and 30 percent by volume or less of oxide phase, 10 percent by volume or more and 65 percent by volume or less of metal phase, and 10 percent by volume or more and 50 percent by volume or less of pores. It is preferable that the oxide phase contains an Al oxide and an alkaline-earth metal oxide, besides a Si oxide, because the oxidation resistance and the thermal shock resistance can be improved and the strength can be enhanced. In this regard, the Si oxide, the Al oxide, and the alkaline-earth metal oxide may not be distinguished clearly. For example, the Si oxide, the Al oxide, and the alkaline-earth metal oxide may be composite oxides. In this oxide phase, it is preferable that the alkaline-earth metal contained in the alkaline-earth metal oxide is at least one type of Mg, Ca, Sr, and Ba. This is because the oxidation resistance and the thermal shock resistance can be further improved and the strength can be further enhanced.

In the base material production step, materials for the porous honeycomb base material are mixed, and the partition portion is formed by a predetermined forming method. As for the material for the base material, for example, SiC serving as an aggregate, metal Si, an oxide, a pore-forming material, and a dispersion medium may be mixed to prepare pottery clay or slurry and be used. For example, a SiC powder, a metal Si powder, and an oxide powder are mixed at a predetermined volume ratio and are added to a dispersion medium, e.g., water, and a pore-forming material. Furthermore, an organic binder and the like are added to the resulting mixture and kneading is performed, so that plastic pottery clay can be formed. The procedure to prepare the pottery clay through kneading is not specifically limited. Examples can include a method by using a kneader, a vacuum kneading machine, or the like. As for the pore-forming material, a material which is burnt off through firing in the downstream is preferable. For example, starch, coke, resin foam, and the like can be used. As for the binder, it is preferable that organic binders of, for example, cellulose base are used. As for the dispersion agent, surfactants, e.g., ethylene glycol, can be used. This porous honeycomb base material may be formed as a honeycomb compact through extrusion into any shape described above by using a mold having a shape in which cells are disposed side by side. It is preferable that the resulting honeycomb compact is subjected to a dying treatment, a calcination treatment, and a firing treatment. The calcination treatment is a treatment in which organic components contained in the honeycomb compact are removed through burning at a temperature lower than a firing temperature. The firing temperature can be specified to be 1,400°C or higher and 1,500°C or lower, and 1,430°C or higher and 1,450°C or lower is preferable. The firing atmosphere is not specifically limited, but an inert gas atmosphere is preferable, and an Ar atmosphere is more preferable. The porous honeycomb base material, which is a sintered body, can be obtained through the above-described steps.

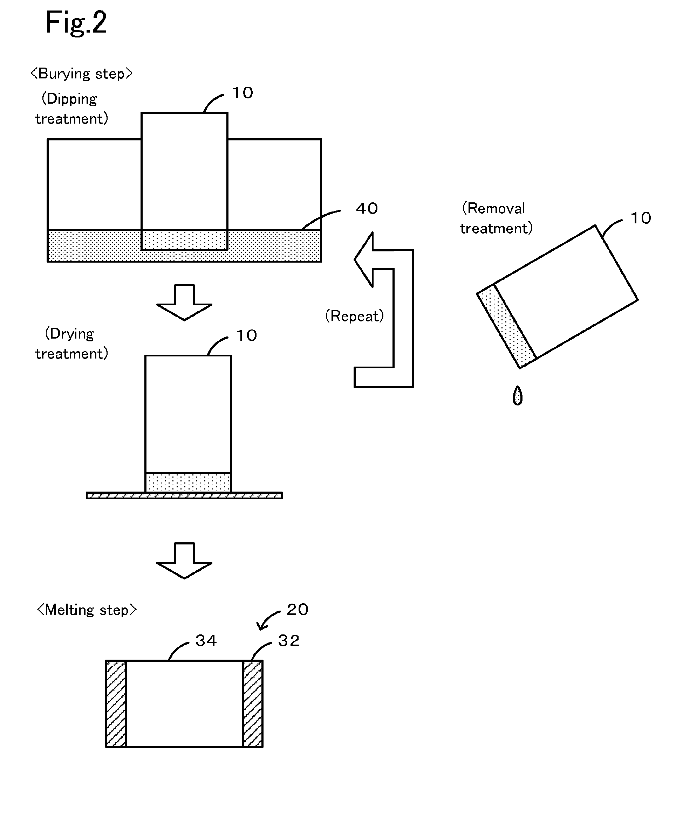

In the burial step, the burial base material containing metal Si particles and metal Al particles having a particle diameter smaller than the pore diameter of the pore is buried into the pores of the porous honeycomb base material. Fig. 2 is an explanatory diagram showing an example of the burial step and the melting step. As shown in Fig. 2, in a method for burying the burial base material into pores of a porous honeycomb base material 10, burying can be performed by, for example, producing a burial slurry 40 containing the burial base material and dipping the porous honeycomb base material 10 into the resulting burial slurry. For example, the burial slurry 40 may be produced by mixing metal Si particles, metal Al particles, and a dispersion medium containing a dispersing agent. As for the dispersion medium, an organic solvent, e.g., ethanol, methanol, or acetone, can be favorably used from the viewpoint of avoiding oxidation of the metal powder. It is preferable that the dispersing agent be adsorbed to a metal powder surface easily and be soluble in an organic solvent and, for example, a surfactant, e.g., an alkylammonium salt, can be used. Meanwhile, the concentration of the burial slurry 40 may be selected appropriately in accordance with the composition and the pore diameter of the porous honeycomb base material 10, the blending ratio of the burial base material, and the like. At this time, the amount of burying of the burial base material into the pores of the porous honeycomb base material 10 may be adjusted by changing the concentration of the burial slurry 40. In this regard, the amount of burying of the burial base material into the pores of the porous honeycomb base material 10 may be adjusted by repeating a dipping treatment to dip the porous honeycomb base material 10 into the burial slurry containing the burial base material, a removal treatment to remove an excess slurry, and a drying treatment to dry the dipped porous honeycomb base material 10 a plurality of times. That is, the amount of burying of the burial base material into the pores of the porous honeycomb base material 10 may be adjusted by changing the number of times of the treatment in which the porous honeycomb base material 10 is dipped into the slurry containing the burial base material and the dipped porous honeycomb base material 10 is dried. Consequently, the amount of burying of the burial base material can be adjusted relatively easily. In the dipping treatment, for example, the dipping temperature may be specified as room temperature or 40°C to 80°C and dipping time may be specified as several seconds to 1 hour. The removal treatment may be, for example, air blowing. The drying treatment can be performed in the air within a temperature range of 40°C to 150°C, for example. At this time, the removal treatment and the drying treatment may be omitted appropriately. Furthermore, in the burial step, when the porous honeycomb base material is dipped into the burial slurry, it is preferable that ultrasonic vibration be given to at least one of the burial slurry and the porous honeycomb base material. When the ultrasonic vibration is given, metal particles can be put into pores of the porous honeycomb base material more easily. In this regard, the method for burying the burial base material into the porous honeycomb base material is not specifically limited. For example, a burial paste in which a base material is mixed into a solvent may be produced and the resulting burial paste may be applied to part of the porous honeycomb base material, or the burial paste may be pressure-supplied and be filled into pores.

In this burial step, a dipping region of the porous honeycomb base material is not specifically limited, and it is enough that a region to be provided with the electrode portion 32 of the partition portion 22 is dipped. Consequently, the burial base material can be buried into pores of the partition portion 22 dipped and the electrode portion 32 is formed in this region. Specifically, for example, the burial base material may be buried into pores of one end portion and pores of the other end portion opposite to the one end portion of the porous honeycomb base material. At this time, it is preferable that the burial base material be buried in pores of the end portion on the upstream side and pores of the end portion on the downstream side of the porous honeycomb base material, and it is more preferable that the burial base material be buried in pores of the whole end portion on the upstream side and pores of the whole end portion on the downstream side of the porous honeycomb base material. This is because when the burial base material is disposed at the end portion of the porous honeycomb base material, it is easy to bury the burial base material. Also, this is because when the burial base material is disposed at the whole end portion of the porous honeycomb base material, the burial base material can be formed by dipping the whole end portion into the burial slurry and, therefore, it is more easy to bury the burial base material. It is preferable that the region, into which the burial base material is buried, of the porous honeycomb base material be, for example, a region in which the length of the electrode portion 32 relative to the whole length in the direction of energization of the honeycomb structure, that is, the length of the electrode portion 32 relative to the whole length in the flow path direction of the honeycomb structure 20, becomes 1/100 or more and 1/5 or less. In the case of 1/100 or more, a sufficient conductive path can be ensured and, therefore, a potential difference is not generated easily in the electrode even when large amounts of current is passed during energization heat generation, so that more suitability for the electrode is exhibited. Meanwhile, in the case of 1/5 or less, the heat generation portion 34 does not become too small. In this regard, in the use as a honeycomb structure employed for mounting on a vehicle, the substantial length in the flow path direction of the electrode portion 32 is preferably 1 mm or more and 50 mm or less, and more preferably 5 mm or more and 30 mm or less. In particular, the length of the end portion on the upstream side in the flow path direction of the electrode portion 32 is preferably 5 mm or more. This is because erosion or the like of the partition portion 22 due to an exhaust gas stream occurs easily on the upstream side, but in the case of 5 mm or more, an electrode remains.

In this burial step, it is preferable that the metal Si particles and the metal Al particles having an average particle diameter more than or equal to one-hundredth and less than or equal to one-half the average pore diameter of the porous honeycomb base material be used as the burial base material. Consequently, the burial base material is buried into pores of the porous honeycomb base material easily. It is preferable that the average particle diameter of the metal Si particles substantially used in this burial step be 0.1 µm or more and 10 µm or less from the viewpoint of ease of handling. In the case of 10 µm or more, unfavorably, dispersion into a slurry is difficult, and entering into pores of the partition portion is difficult. Meanwhile, 0.1 µm or less is not preferable because the metal surface is oxidized easily. In this regard, 0.5 µm or more and 3 µm or less is more preferable from the viewpoint of ease of controlling the burial region of the burial base material. More specifically, when the porous honeycomb base material is dipped into the burial slurry, even if the dispersion medium is sucked upward from the slurry liquid surface due to capillary phenomenon, metal particles can be stopped in the vicinity of the liquid surface. Likewise, the average particle diameter of the metal Al particles is preferably 0.1 µm or more and 10 µm or less, and more preferably 0.5 µm or more and 3 µm or less. Meanwhile, an atomized powder having a nearly spherical shape is preferable as compared with a pulverized powder having a distorted shape from the viewpoint of ease of entering into pores. Here, the average particle diameter of particles refers to a median diameter (D50) measured by using a laser diffraction/scattering particle size distribution measuring apparatus and ethanol serving as a dispersion medium. Meanwhile, the average pore diameter refers to a central pore diameter determined by mercury porosimetry. In this burial base material, the proportion of metal Al relative to a total amount of metal Si and metal Al is preferably 0.001 percent by mole or more, and preferably 20 percent by mole or less. In the case where the proportion of metal Al is 0.001 percent by mole or more, a metal phase is formed in the porous honeycomb base material more easily in the succeeding melting step and the volume resistivity of the resulting honeycomb structure can be decreased sufficiently. Also, in the case where the proportion of metal Al is 20 percent by mole or less, the amount of Al having a high thermal expansion coefficient is not too much, so that thermal expansion of the metal phase is suppressed and high-temperature strength of the honeycomb structure can be more enhanced. Meanwhile, 0.1 percent by mole or more is more preferable, and 0.4 percent by mole or more is further preferable from the viewpoint of decreasing the viscosity of the metal phase in the succeeding melting step and enhancing the wettability between the SiC phase and the metal phase. This is because the eutectic point of the metal phase is lowered and Si oxides on the SiC phase surface can be reduced. Meanwhile, 10 percent by mole or less is preferable, and 5 percent by mole or less is further preferable from the viewpoint of enhancing the heat resistance and the high-temperature strength of the resulting electrode portion 32 and adjusting the thermal expansion coefficient.

The burial base material may further contain an alkaline earth metal compound. The alkaline earth metal compound is not specifically limited. For example, salts, e.g., carbonates, nitrates, and sulfates, are preferable and, among them, carbonates are preferable. The wettability between the SiC phase and the metal phase can be further enhanced when the metal phase is formed from the burial base material in the succeeding melting step. In this regard, Mg, Ca, SR, and Ba are preferable as the alkaline earth metal and, among them, Ca and Sr are more preferable. This is because the wettability can be more enhanced by removing Si oxides on the SiC phase surface through melting. The amount of alkaline earth metal compounds is not specifically limited, but is preferably 1 percent by mass or more and 30 percent by mass or less, and more preferably 5 percent by mass or more and 15 percent by mass or less relative to a total amount of metal Si and metal Al contained in the burial base material. In the case of 1 percent by mass or more, the above-described effect of enhancing the wettability is obtained and in the case of 30 percent by mass or less, the amount of impurities in the resulting honeycomb structure can be decreased.

In the melting step, the porous honeycomb base material including the buried burial base material is heated in an inert atmosphere, so as to melt metal Si and metal Al contained in the buried burial base material and form a metal phase containing metal Si and metal Al in pores of the porous honeycomb base material. The atmosphere of the heating is not specifically limited insofar as the inert atmosphere is ensured, although an Ar atmosphere at normal pressure is preferable. In this regard, the temperature to melt the burial base material may be adjusted by adjusting the pressure. The heating temperature is not specifically limited insofar as the heating temperature is higher than or equal to the temperature at which metal Si and metal Al are melted and lower than or equal to the temperature at which the quality of porous honeycomb base material is not altered, although 1,000°C or higher and 1,500°C or lower is preferable, and 1,300°C or higher and 1,450°C or lower is more preferable. As shown in Fig. 1, electrode portions 32 are formed in parts of region of the partition portion 22 through the melting step.

In this melting step, in the case where an inconvenience occurs in such a way that a metal phase containing metal Si and metal Al spouts from the porous honeycomb base material to the surface of the partition portion 22, spouting may be suppressed by decreasing the amount of burying of the burial base material into pores of the porous honeycomb base material 10 in the above-described burial step. Alternatively, the above-described heating temperature may be adjusted. Consequently, the spouting can be suppressed by bringing about a necking state between fine particles on the basis of bonding of contact points of particle surfaces without melting metal Si and metal Al completely. More specifically, it is particularly preferable to specify the heating temperature as 1,300°C, at which the surface of metal Si begins softening, or higher and 1,350°C or lower. The thus produced honeycomb structure can have a structure in which the metal Si particles and the metal Al particles having an average particle diameter of 0.1 µm or more and 10 µm or less are present in pores of the partition portion 22 while particle shapes are maintained and a necking state between particles is brought about on the basis of bonding of contact points of particle surfaces. In this regard, although the cause of an occurrence of spouting is not certain, it is estimated that the wettability between metal Si and the base material is poor and spouting occurs because of pushing out of pores depending on the condition. It is estimated that, at this time, spouting can be suppressed by decreasing the absolute amount of molten metal or lowering the heating temperature to restrict movement of the molten metal, as described above.

Meanwhile, in the method for manufacturing the honeycomb structure according to the present invention, the Young's modulus of the electrode portion 32 and the heat generation portion 34 may be adjusted appropriately. Consequently, when the honeycomb structure is subjected to energization heat generation, the electrode portion 32 can be deformed following the deformation of the heat generation portion 34. Therefore, generation of an internal stress along with deformation of the honeycomb structure is decreased and occurrences of cracking and the like can be suppressed. In this regard, a suitable Young's modulus is changed by design factors of the honeycomb structure. Specifically, the Young's modulus can be determined appropriately from a thermal stress difference calculated on the basis of the base material structure, e.g., the shape of the honeycomb structure, the diameter, the length, the partition thickness, and the cell density, the electrode structure, e.g., the lengths of the electrode portion 32 and the heat generation portion 34 and the electric resistance value, the use condition, e.g., the heating rate (applied voltage) and the heat cycle, and the like. In this regard, as for the method for controlling the Young's modulus, for example, in the above-described burial step, the control can be performed by adjusting the amount of burying of the burial base material into pores of the porous honeycomb base material 10. That is, the Young's modulus can be controlled by changing the porosity appropriately in accordance with a change in mass of the burial base material. The porosity of the electrode portion 32 may be specified to be within the range of, for example, more than 30 percent by volume and 40 percent by volume or less. Alternatively, the Young's modulus may be decreased by adjusting the heating temperature in the melting step, as described above, to establish the structure in which the metal Si particles and the metal Al particles having an average particle diameter of 0.1 µm or more and 10 µm or less are present in pores of the partition portion 22 while particle shapes are maintained and a necking state between particles is brought about on the basis of bonding of contact points of particle surfaces. Here, the purport of the term "particle shapes are maintained" includes that particles of metal Si and metal Al are not melted completely and parts of the shapes are maintained. Also, the term "necking state" may be a state in which at least one particle of a plurality of particles present is bonded to an adjacent particle, put another way, be a structure in which many pores are present around a particle. In the case where such a structure is employed, the volume resistivity is decreased because of necking between particles, and the Young's modulus can be maintained at a low level because of presence of many pores around a particle. Meanwhile, the heating temperature applied is adjusted appropriately in accordance with a total amount of metal Si (melting point 1,410°C) and metal Al (melting point 660°C) of the burial base material employed, a mixing ratio, and predetermined volume resistivity and Young's modulus. That is, in the case where the proportion of metal Al increases, a lower heating temperature may be selected, and in the case where a decrease in the volume resistivity is intended, necking may be increased by setting the heating temperature at a high level. In the case where maintenance of the Young's modulus at a low level is intended, the heating temperature may be set at a low level and, thereby, the state of presence of many pores may be maintained. As for a method other than that, for example, the Young's modulus can also be controlled by decreasing the raw material particle size of the electrode portion 32 as compared with that of the heat generation portion 34.

The thus produced honeycomb structure 20 is provided with the electrode portion 32 and the heat generation portion 34, heat is generated from the heat generation portion 34 by applying a voltage from the electrode portion 32 and, thereby, the temperature of the whole honeycomb structure 20 can be raised. Consequently, for example, in the case where the honeycomb structure 20 is used as a catalyst carrier to carry a catalyst for cleaning hazardous substances contained in an exhaust gas from an engine of an automobile, the honeycomb structure 20 is disposed in an exhaust pipe on the downstream side of the engine. When the temperature of the exhaust gas from the engine does not reach the temperature at which the hazardous substances contained in the exhaust gas from the engine can be removed, the temperature of the honeycomb structure 20 can be raised by applying a voltage from the electrode portion 32, so that the exhaust gas cleaning performance can be further enhanced.

In the method for manufacturing the honeycomb structure 20 described above in detail, the electrode portion 32 can be formed more easily, and the volume resistivity of the electrode portion 32 can be more decreased. The reason for this is estimated as described below. For example, an impregnation method is considered, where an impregnation base material is formed on the surface of the partition portion 22 and is melted to impregnate pores of the partition portion with metal Si. However, in general, Si oxides have poor wettability with metal Si, and even when impregnation of metal Si is intended, it is difficult to impregnate the partition portion 22 with metal Si because of an influence of an oxide phase containing Si oxides to a larger extent. Here, particles of metal Si and metal Al are as-is buried into pores of the partition portion 22, so that metal Si and metal Al can be put into pores relatively smoothly. Thereafter, melting is performed and, thereby, a metal phase containing metal Si and metal Al can be formed in pores of the partition portion 22. Meanwhile, the metal phase containing metal Si and metal Al is formed and, thereby, the volume resistivity of the electrode portion can be decreased as compared with that contains only metal Si. In this regard, it is considered that the relationship between the phase contained in the porous honeycomb base material and the phase contained in the honeycomb structure 20 is roughly as described below. That is, it is considered that the SiC phase of the porous honeycomb base material constitute the SiC phase of the electrode portion 32 and metal Si and metal Al contained in the burial base material and the metal Si phase of the porous honeycomb base material constitute the metal phase of the electrode portion 32. Also, it is considered that the metal Si phase of the porous honeycomb base material, buried metal Si, buried metal Al, alkaline earth metal compounds used for the burial base material, and the like and the oxide phase of the porous honeycomb base material constitute the oxide phase of the electrode portion 32.

In this regard, it is needless to say that the present invention is not limited to the above-described embodiment and can be executed in various aspects within the technical scope of the present invention.

For example, in the above-described embodiment, the method for manufacturing the honeycomb structure has been explained, although not limited to this. For example, a porous base material may be produced in place of the porous honeycomb base material and an energization heating element provided with an electrode portion and a heat generation portion may be produced by using this. That is, the method for manufacturing a Si-SiC based composite material may include a burial step to bury a burial base material into pores of a porous base material which has a SiC phase and an oxide phase containing a Si oxide, where the burial base material contains metal Si particles having a particle diameter smaller than the pore diameter of the pore and metal Al particles having a particle diameter smaller than the pore diameter of the pore, and a melting step to melt the metal Si particles and the metal Al particles, which are contained in the burial base material, by heating the porous base material including the buried burial base material in an inert atmosphere, so as to form a metal phase containing metal Si and metal Al in pores of the porous base material. Consequently, the electrode portion can be formed more easily, and the volume resistivity can be more decreased.

In the above-described embodiment, the energization heating element provided with the electrode portion and the heat generation portion is produced. However, the production may be performed in such a way that only the electrode portion is specified as an electrically conductive Si-SiC based composite material. Consequently, the electrically conductive Si-SiC based composite material can be produced more easily and, in addition, the volume resistivity of this material can be more decreased.

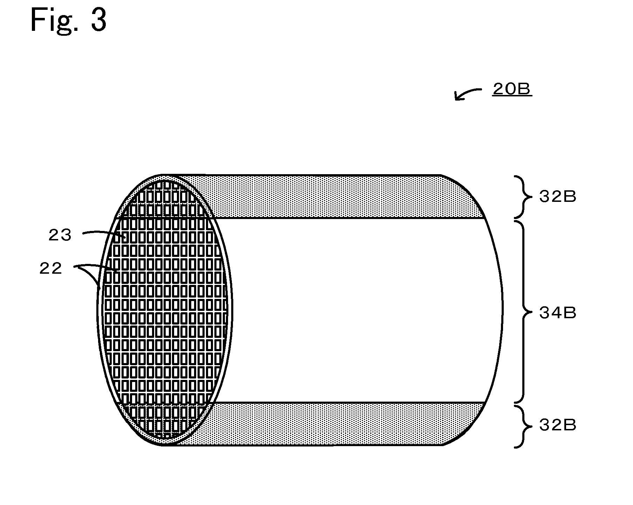

In the above-described embodiment, the honeycomb structure 20 including the electrode portions 32 at the upstream end portion and the downstream end portion have been explained, although not specifically limited to this insofar as electrode portions are disposed at one end portion of a honeycomb structure and the other end portion opposite to this end portion, as shown in Fig. 3. Fig. 3 is an explanatory diagram schematically showing an example of the configuration of a honeycomb structure 20B. As shown in Fig. 3, a heat generation portion 34B may be disposed in a central region along the cells 23, and electrode portions 32B may be disposed along the cells 23 in a region including the wall portion of the outer circumferential surface of the honeycomb structure 40 while sandwiching the heat generation portion 34B and being opposite to each other. That is, the electrode portions 32B may be disposed at an upper end portion and a lower end portion (or right end portion and left end portion) of the honeycomb structure 20B. In this case, the electrode portions 32B may be disposed from the end portion on the upstream side to the end portion on the downstream side parallel to the flow path continuously or intermittently. Consequently, heating can be performed efficiently from the upstream side to the downstream side of the honeycomb structure 40B. Also, both the electrode portions 32B opposite to each other are disposed in the region other than the upstream side end portions and, therefore, even when the partition portions at the upstream side end portions are lost due to erosion or the like, the electrode portions remain and energization can be performed sufficiently.

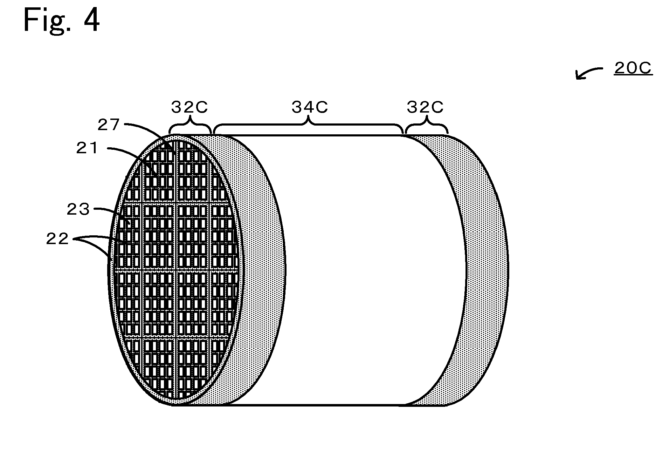

In the above-described embodiment, the integrally formed honeycomb filter is employed. However, as shown in Fig. 4, a honeycomb structure 20C in which honeycomb segments 21 are bonded by bonding layers 27 may be employed. Consequently, the stress concentrated on the outside perimeter portion of the honeycomb because of thermal expansion can be relaxed by the structure bonded with bonding layers 27.

In the above-described embodiment, a honeycomb structure having a structure in which both ends of the cell 23 are opened has been explained, although not specifically limited to this. For example, a so-called honeycomb filter may be provided, wherein cells, in which one end portion is opened and the other end portion is sealed with a sealing portion, and cells, in which one end portion is sealed with a sealing portion and the other end portion is opened, are arranged alternately. Furthermore, in this honeycomb filter, a collection layer, which is a layer to collect solid components (PM) contained in a fluid (exhaust gas), may be disposed in the partition portion. In this honeycomb filter, the exhaust gas entering the cell from the inlet side is passed through the collection layer and the partition portion and is discharged from the cell on the outlet side. At this time, PM contained in the exhaust gas is collected on the collection layer. Consequently, solid components contained in the exhaust gas can be removed.

In the above-described embodiment, the manufacturing method include the base material production step, but this step may be omitted. For example, a porous honeycomb base material prepared in advance may be used. Furthermore, in the above-described base material production step, the porous honeycomb base material subjected to firing is used, although not specifically limited to this. An unfired honeycomb compact may be used.

### EXAMPLES

Specific examples of production of honeycomb structures will be described below.

### [Example 1]

### (Production of porous honeycomb base material)

As for raw materials for a porous honeycomb base material, a SiC powder, a metal Si powder, and an oxide powder containing an alkaline-earth metal were mixed in such a way that the volume ratio became 38:22:2. A honeycomb-shaped compact was produced and firing was performed at 1,430°C for 3 hours in an Ar atmosphere at normal pressure. In this manner, a porous honeycomb base material having a partition thickness of 100 µm, a cell density of 62 cells/cm² (400 cpsi), a diameter of 100 mm, and a length of 100 mm was obtained. The resulting porous honeycomb base material had a volume resistivity of central portion of 117 Ωcm and a porosity of partition portion of 38 percent by volume.

### (Preparation of burial base material and alkaline earth metal compound)

A burial base material and a slurry of an alkaline earth metal compound were prepared as described below. Initially, a metal Si powder (average particle diameter 2 µm) and a metal Al powder (average particle diameter 1 µm) were mixed at a molar ratio of 80:20 to obtain a mixed powder. Then, 1.0 percent by mass of dispersing agent (alkylammonium salt) relative to ethanol serving as a dispersion medium was externally added to ethanol, and 20 percent by mass of mixed powder relative to the ethanol was further added, so as to prepare a burial slurry containing the burial base material. Subsequently, the porous honeycomb base material produced as described above was dipped into the resulting burial slurry at ambient temperature and normal pressure for 10 seconds. Furthermore, an excess slurry on the porous honeycomb base material surface was blown off with air and, thereafter, drying was performed at 120°C for 3 hours in the air atmosphere. Then, the treatment from dipping to drying was repeated until a predetermined mass of burial base material was buried in the porous honeycomb base material, so that the burial base material was formed in the inside of pores of the porous honeycomb base material. Here, the predetermined mass may be the amount enough for ensuring the desired volume resistivity of the electrode portion. However, from the viewpoint of burying into pores, the value smaller than a maximum amount of burying calculated from the pore volume was employed.

### (Melting treatment)

The melting treatment was performed by firing the porous honeycomb base material including the buried burial base material at 1,450°C for 4 hours in an Ar atmosphere at normal pressure, as shown in Fig. 2. In this manner, a honeycomb structure in Example 1 was obtained.

### [Examples 2 and 3]

A honeycomb structure in Example 2 was obtained through the same steps as in Example 1 except that the burial slurry was prepared by using a mixed powder, in which the metal Si powder and the metal Al powder were mixed at a molar ratio of 95:5, as the burial base material. Furthermore, a honeycomb structure in Example 3 was obtained through the same steps as in Example 1 except that the burial slurry was prepared by using a mixed powder, in which the metal Si powder and the metal Al powder were mixed at a molar ratio of 99.6:0.4, as the burial base material.

### [Examples 4 to 7]

Meanwhile, in Examples 4 to 7, addition of an alkaline earth metal compound to the burial base material was studied. A honeycomb structure in Example 4 was obtained through the same steps as in Example 1 except that a burial slurry was prepared using a mixed powder, in which 2.7 parts by mass of CaCO₃ was mixed relative to 100 parts by mass of the burial base material in Example 1, as the burial base material, and the burial base material, the mass of which was specified in such a way as to make the porosity of the electrode portion 30 percent by volume in the melting treatment, was buried into the porous honeycomb base material. Also, a honeycomb structure in Example 5 was obtained through the same steps as in Example 4 except that a burial slurry was prepared using a mixed powder, in which 8.2 parts by mass of CaCO₃ was mixed to the burial base material, and the burial base material, the mass of which was specified in such a way as to make the porosity of the electrode portion 20 percent by volume in the melting treatment, was buried into the porous honeycomb base material. Also, a honeycomb structure in Example 6 was obtained through the same steps as in Example 4 except that a burial slurry was prepared using a mixed powder, in which 13.5 parts by mass of CaCO₃ was mixed to the burial base material, and the burial base material, the mass of which was specified in such a way as to make the porosity of the electrode portion 12 percent by volume in the melting treatment, was buried into the porous honeycomb base material. Also, a honeycomb structure in Example 7 was obtained through the same steps as in Example 4 except that a burial slurry was prepared using a mixed powder, in which 13.5 parts by mass of CaCO₃ was mixed to the burial base material, and the burial base material, the mass of which was specified in such a way as to make the porosity of the electrode portion 30 percent by volume in the melting treatment, was buried into the porous honeycomb base material.

### [Examples 8 to 11]

In Examples 8 to 11, adjustment of the amount of burying of burial base material was studied. A honeycomb structure in Example 8 was obtained through the same steps as in Example 2 except that the number of times of the treatment from dipping to drying in the burial step was specified as 4 times. Likewise, in Example 9, the number of times of the treatment was specified as 2 times, and in Example 10, the treatment was 1 time. In Example 11, the concentration of the burial slurry was specified as 10 percent by mass and the number of times of the treatment from dipping to drying was specified as 1 time.

### [Example 12]

In the study of Example 12, the melting treatment temperature was adjusted. A honeycomb structure in Example 12 was obtained through the same steps as in Example 8 except that firing was performed at 1,350°C for 4 hours in the melting treatment.

### [Comparative examples 1 to 4]

In Comparative example 1, a porous honeycomb base material was obtained without performing the burial treatment. Meanwhile, in Comparative example 2, production was performed by mixing a SiC powder, a metal Si powder, and an alkaline earth metal oxide powder in such a way that the volume ratio became 34:26:2 in order to increase the proportion of metal Si constituting the porous honeycomb base material. A honeycomb structure in Comparative example 3 was obtained through the same steps as in Example 1 except that metal Al was not contained in the burial base material, and the burial base material, the mass of which was specified in such a way as to make the porosity of the electrode portion 20 percent by volume in the melting treatment, was buried into the porous honeycomb base material. Also, a honeycomb structure in Comparative example 4 was obtained through the same steps as in Example 1 except that the average particle diameter of metal Si of the burial base material was specified as 15 µm.

### (Measurement of porosity)

The porosity was measured by mercury porosimetry through the use of a mercury porosimeter (PoreMaster produced by Quantachrome Instruments).

### (Measurement of volume resistivity)

The volume resistivity was measured as described below. Initially, a rectangular parallelepiped test piece of three cells (rib thickness 0.01 cm, the number of ribs 4) was cut from the honeycomb structure produced. A Pt paste was applied to both end surfaces of this test piece, wiring was performed with Pt lines, so as to connect to a voltage source current measuring device, and a voltage was applied in the flow path direction by a direct-current four-terminal method. The measurement results were used, and calculation was performed on the basis of a formula, volume resistivity (Ωcm) = resistivity x 0.01 x 4 x a/b, where the sample height was represented by a and the electrode distance was represented by b.

### (Measurement of Young's modulus)

In Examples 8 to 12, the Young's modulus was measured as described below. Initially, a rectangular parallelepiped test piece of 5 x 3 cells (length 5 cm) was cut from the honeycomb structure produced. The measurement was performed on the basis of a resonance method by using a free vibration elastic modulus meter (Model JE-HT produced by Nihon Techno-Plus Corp.). The value obtained by normalizing each of the resulting Young's modulus by the Young's modulus in Comparative example 2 (porous honeycomb base material with no burial treatment: corresponding to heat generation portion) was specified as "ratio of Young's modulus relative to heat generation portion".

### (SEM Observation)

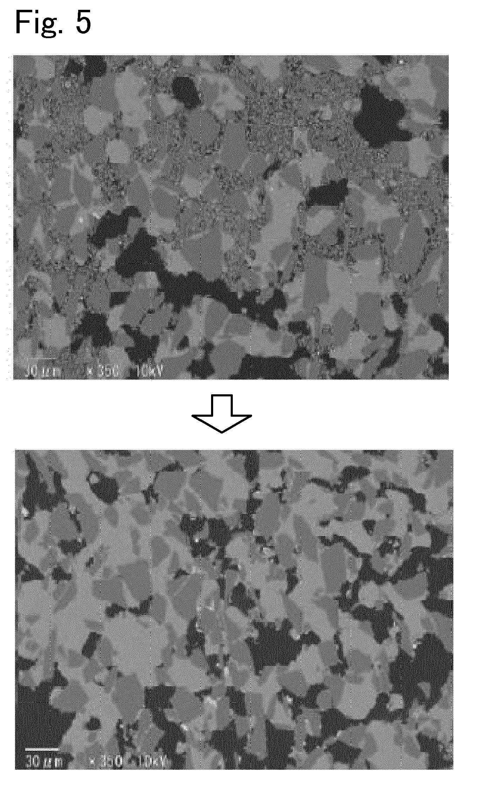

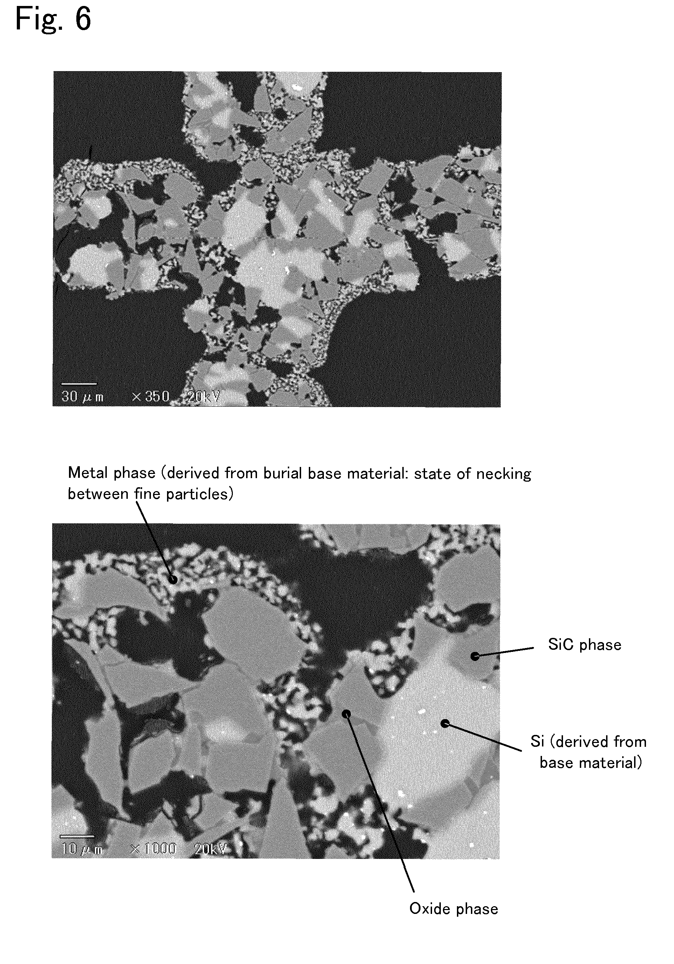

SEM photographs of the honeycomb structures in Examples 1 and 12 were taken by using an electron microscope (JSM-5410 produced by JEOL LTD.). Fig. 5 shows SEM photographs of the porous honeycomb base material after the burial treatment and after the melting treatment in Example 1. It was able to be ascertained that metal Si particles and metal Al particles of the burial base material were buried in pores disposed in the partition portion. Also, after the melting treatment, it was ascertained that the buried burial base material was melted. Meanwhile, Fig. 6 shows SEM photographs of the porous honeycomb base material after the melting treatment in Example 12. As shown in Fig. 6, it was observed that metal Si particles and metal Al particles having an average particle diameter of 0.1 µm or more and 10 µm or less were present in pores of the partition portion while particle shapes were maintained and a necking state between particles was brought about on the basis of bonding of contact points of particle surfaces, in Example 12. More specifically, the metal Si powder (average particle diameter 2 µm) and the metal Al powder (average particle diameter 1 µm) employed as the burial base material were not melted completely and were in the state in which parts of the shapes were maintained and at least one particle of a plurality of particles present was bonded to an adjacent particle. Put another way, in the structure, many pores were present around a particle.

### (Result and discussion)

Tables 1 and 2 shows experimental results in Examples 1 to 12 and Comparative examples 1 to 4. As shown in Table 1, it was found that in Examples 1 to 7, the volume resistivities of the electrode portions decreased. Also, it was found that the volume resistivity did not decrease sufficiently in the state in which metal Si increased, as in Comparative example 2, and only metal Si was buried, as in Comparative example 3. Meanwhile, in all Examples, the volume resistivities were a low 1 Ωcm or less and were less than or equal to one-hundredth the volume resistivities in Comparative examples, which were believed to exhibit volume resistivities nearly equal to those of the base materials. From these results, it was found that the volume resistivity was able to be decreased by burying the burial base material containing metal Al or the alkaline earth metal compound. Moreover, as shown in Table 2, it was found that in Examples 8 to 11, the porosity was able to be maintained at somewhat high level and the Young's modulus was able to be decreased by decreasing the amount of burying of the burial base material (the number of times of treatment) or decreasing the burial slurry concentration. Also, it was found that in Example 12, the Young's modulus was able to be decreased as compared with Example 8 in which the conditions were the same except the temperature by lowering the heating temperature in the melting step and, thereby, bringing the metal phase composed of metal Si and metal Al into the state in which necking between fine particles were induced, as shown in Fig. 6. Moreover, although details are omitted, nearly the same results were obtained in the case where a porous base material not in the honeycomb shape, but in the pellet shape was used. Consequently, it is estimated that the present invention can be applied to not only the honeycomb-shape type, but also various types.

**[Table 1]**

| | Honeycome base material | | | | Burial base material (Electrode material) | | | | Evaluation result | |
|---|---|---|---|---|---|---|---|---|---|---|
| | Si | SiC | Oxide | Porosity | Si particle diameter | Si | Al | CaCO₃ | Porosity | Volume resistivity |
| | % by volume | % by volume | % by volume | % by volume | *µ*m | mol% | mol% | % by mass | % by volume | Ωcm |
| Example 1 | 22 | 38 | 2 | 38 | 2 | 80 | 20 | 0 | 20 | 0.08 |
| Example 2 | 22 | 38 | 2 | 38 | 2 | 95 | 5 | 0 | 20 | 0.77 |
| Example 3 | 22 | 38 | 2 | 38 | 2 | 99.6 | 0.4 | 0 | 20 | 9.8 |
| Example 4 | 22 | 38 | 2 | 38 | 2 | 80 | 20 | 2.7 | 30 | 0.84 |
| Example 5 | 22 | 38 | 2 | 38 | 2 | 80 | 20 | 8.2 | 20 | 0.94 |
| Example 6 | 22 | 38 | 2 | 38 | 2 | 80 | 20 | 13.5 | 12 | 0.97 |
| Example 7 | 22 | 38 | 2 | 38 | 2 | 80 | 20 | 13.5 | 30 | 0.5 |
| Comparative example 1 | 22 | 38 | 2 | 38 | - | 0 | 0 | 0 | 38 | 117 |
| Comparative example 2 | 26 | 34 | 2 | 38 | - | 0 | 0 | 0 | 38 | 70 |
| Comparative example 3 | 22 | 38 | 2 | 38 | 2 | 100 | 0 | 0 | 20 | 40 |
| Comparative example 4 | 22 | 38 | 2 | 38 | 15 | 80 | 20 | 0 | Burial base material was not buried | - |

| | | | | | | | | | | |
|---|---|---|---|---|---|---|---|---|---|---|
| *) Details of test piece: Diameter of 100mm, length of 100mm, partition thickness WT=100(*µ*m), cell density of 62 cells/cm2(400cpsi) | | | | | | | | | | |

**[Table 2]**

| | Burying step | | Melting step | Evaluation result | | |
|---|---|---|---|---|---|---|
| | Slurry concentration | Treatment | Heating temperature | Porosity | Volume resistivity | Ratio of Young's modulus relative to heat genetaion portion |
| | % by mass | Number of times | °C | % by volume | Ωcm | |
| Example 8 | 20 | 4 | 1450 | 33 | 1 | 1.24 |
| Example 9 | 20 | 2 | 1450 | 34 | 2 | 1.20 |
| Example 10 | 20 | 1 | 1450 | 35 | 3 | 1.14 |
| Example 11 | 10 | 1 | 1450 | 37 | 7 | 1.05 |
| Example 12 | 20 | 4 | 1350 | 33 | 0.3 | 1.13 |

| | | | | | | |
|---|---|---|---|---|---|---|
| *) Details of test piece: Diameter of 100mm, length of 100mm, partition thickness WT=100(*µ*m), cell density of 62 cells/cm2(400cpsi) Honecome base material : Si=26 % by volume, SiC=34% by volume, oxide=2% by volume, porosity=38% by volume Burial material : Si particle diameter=2 *µ*m, Si=95mol%, Al=5mol%,CaCO₃=0% by mass | | | | | | |

The present application claims priority from Japanese Patent Application No. 2011-69939 filed on March 28, 2011, the entire contents of which are incorporated in the present specification by reference.

### Industrial Applicability

The present invention can be used favorably as, for example, a honeycomb structure to clean an exhaust gas discharged from an automobile engine, a stationary engine for construction machinery or industry, a burning appliance, or the like.

### Reference Signs List

10 porous honeycomb base material, 20, 20B, 20C honeycomb structure, 21 honeycomb segment, 22 partition portion, 23 cell, 27 bonding layer, 32, 32B, 32C electrode portion, 34, 34B, 34C heat generation portion, 40 burial slurry

## Claims

1. A method for manufacturing a honeycomb structure, comprising the steps of:
burying a burial base material into pores of a porous honeycomb base material which is provided with a partition portion constituting a plurality of cells serving as flow paths of a fluid and which has a SiC phase and an oxide phase containing a Si oxide, where the burial base material contains metal Si particles having a particle diameter smaller than the pore diameter of the pore and metal Al particles having a particle diameter smaller than the pore diameter of the pore; and
melting the metal Si particles and the metal Al particles, which are contained in the burial base material, by heating the porous honeycomb base material including the buried burial base material in an inert atmosphere, so as to form a metal phase containing metal Si and metal Al in pores of the porous honeycomb base material.

2. The method for manufacturing a honeycomb structure according to Claim 1, wherein in the step of burying, the metal Si particles and metal Al particles having an average particle diameter more than or equal to one-hundredth and less than or equal to one-half the average pore diameter of the porous honeycomb base material are used as the burial base material.

3. The method for manufacturing a honeycomb structure according to Claim 1 or Claim 2, wherein in the step of burying, the metal Si particles and metal Al particles having an average particle diameter of 0.1 µm or more and 10 µm or less are used as the burial base material.

4. The method for manufacturing a honeycomb structure according to any one of Claims 1 to 3, wherein in the step of burying, the burial base material in which the proportion of the metal Al relative to a total amount of metal Si and metal Al is 0.001 percent by mole or more and 20 percent by mole or less is used.

5. The method for manufacturing a honeycomb structure according to any one of Claims 1 to 4, wherein in the step of burying, the burial base material further containing a compound of alkaline earth metal is used.

6. The method for manufacturing a honeycomb structure according to Claim 5, wherein in the step of burying, at least one of Ca and Sr is used as the alkaline earth metal.

7. The method for manufacturing a honeycomb structure according to any one of Claims 1 to 6, wherein in the step of burying, the porous honeycomb base material is dipped into a slurry containing the burial base material.

8. The method for manufacturing a honeycomb structure according to Claim 7, wherein in the step of burying, the burial base material is buried in pores of the porous honeycomb base material by repeating a treatment, in which the porous honeycomb base material is dipped into the slurry containing the burial base material and the dipped porous honeycomb base material is dried, a plurality of times.

9. The method for manufacturing a honeycomb structure according to Claim 7 or Claim 8, wherein in the step of burying, when the porous honeycomb base material is dipped into the slurry, ultrasonic vibration is given to at least one of the slurry and the porous honeycomb base material.

10. The method for manufacturing a honeycomb structure according to any one of Claims 1 to 9, wherein in the step of melting, heating is performed in an Ar atmosphere serving as the inert atmosphere.

11. The method for manufacturing a honeycomb structure according to any one of Claims 1 to 10, wherein in the step of melting, the porous honeycomb base material including the buried burial base material is heated at a temperature of 1,000°C or higher and 1,500°C or lower.

12. The method for manufacturing a honeycomb structure according to any one of Claims 1 to 11, wherein in the step of melting, the porous honeycomb base material including the buried burial base material is heated at a temperature of 1,300°C or higher and 1,350°C or lower.

13. The method for manufacturing a honeycomb structure according to any one of Claims 1 to 12, wherein in the step of burying, the burial base material is buried into pores of one end portion and pores of the other end portion opposite to the one end portion of the porous honeycomb base material.

14. The method for manufacturing a honeycomb structure according to Claim 13, wherein in the step of burying, the burial base material is buried into pores of the end portion on the upstream side and pores of the end portion on the downstream side of the porous honeycomb base material.

15. A method for manufacturing a Si-SiC based composite material, comprising the steps of:
burying a burial base material into pores of a porous base material which has a SiC phase and an oxide phase containing a Si oxide, where the burial base material contains metal Si particles having a particle diameter smaller than the pore diameter of the pore and metal Al particles having a particle diameter smaller than the pore diameter of the pore; and
melting the metal Si particles and the metal Al particles, which are contained in the burial base material, by heating the porous base material including the buried burial base material in an inert atmosphere, so as to form a metal phase containing metal Si and metal Al in pores of the porous base material.

16. A honeycomb structure comprising a partition portion constituting a plurality of cells serving as flow paths of a fluid,
**characterized in that** the partition portion has a SiC phase and an oxide phase containing a Si oxide, and
a metal Si particles and a metal Al particles having an average particle diameter of 0.1 µm or more and 10 µm or less are present in pores of the partition portion while particle shapes are maintained and a necking state between particles is brought about on the basis of bonding of contact points of particle surfaces.
